# EUROPEAN PATENT SPECIFICATION

(11) **EP 2 106 512 B1**
(45) Date of publication and mention of the grant of the patent: **01.08.2012**
(21) Application number: 06779241.6
(22) Date of filing: 30.08.2006
(51) Int. Cl.: F16H 3/00, F16H 3/42

(54) **GEAR MEANS**
ZAHNRADMITTEL
MOYENS D'ENGRENAGES

(43) Date of publication of application: 07.10.2009
(73) Proprietor: Patel, Hitesh Dhanji, London NW10 0NA (GB)
(72) Inventor: Patel, Hitesh Dhanji, London NW10 0NA (GB)
(74) Representative: Lamb, Martin John Carstairs
(86) International application number: PCT/GB2006/003219
(87) International publication number: WO 2008/025932

(56) References cited:
- WO-A-93/02302
- WO-A-2006/032206
- DE-A1- 10 243 334
- GB-A- 2 309 056
- GB-A- 2 423 557
- JP-A- 10 231 907
- US-A- 5 467 660
- US-A1- 2003 144 105

## Description

### FIELD OF THE INVENTION

This invention relates to gear means, which term may include, for example, a gear (e.g. a gear train), a single gear member, or even just a component for use in a gear member.

### BACKGROUND TO THE INVENTION

Infinitely variable transmissions are known which have between their input and output a variable friction connection or a controllable fluid connection. With these transmissions, there is always a danger of slip, and indeed many operate also as a crutch.

### THE INVENTION

The present inventor has realised that the problem could be overcome if it were possible to design a variable velocity ratio, positively engageable gear member. A variable gear in accordance with the present invention is characterised by the features of independent claim 1.

By "positively engageable" it is meant that drive or thrust is transferred from one member to another by more than a frictional engagement alone.

WO 9302302 A1 discloses a variable gear according to the preamble of claim 1.

According to one aspect of invention, there is provided a gear member having means to engage another gear member positively with variable velocity ratio.

The present invention further provides means, or a component, suitable to enable a gear member to engage another gear member positively with variable velocity ratio.

The present invention further provides a gear member having teeth, able to engage another gear member adaptably.

By "adaptably" it is meant that, whereas in a conventional gear system the first set of gear teeth only engage a second set of gear teeth which are of a specified dimension and placed in a specified configuration with respect to one another, "adaptably engageable" teeth are engageable with other teeth which are not all of the same specified dimension as one another or which are not all in the same specified configuration. If at least one set of teeth is provided, which is adaptably engageable with another set of teeth, the dimensions of which or configuration of which vary continuously over a given distance, a continuously variable drive can be obtained by varying the position at which the first set of teeth engages the second set of teeth. Micro-teeth are teeth defined as:
(a) teeth of which a large number, e.g. at least five or preferably at least ten, can sit between successive teeth of an engaging gear member. Preferably, the number of micro-teeth which sit between successive teeth is variable so that differing configurations of teeth on the engaging gear member can be engaged; or
(b) teeth of which a large number can simultaneously engage micro-teeth or micro teeth-engaging means, e.g. a surface having an array of holes adapted to receive respective micro-teeth of an engaging gear member. Preferably, the micro-teeth of at least one of the engaging gear members extend in a two-dimensional array. With normal (prior art) gears, only about two or three teeth can normally engage a co-operating gear at any one time.

Preferably, a large number of micro teeth can simultaneously engage micro teeth or micro teeth - engaging means of an engaging gear member, the micro teeth or micro teeth - engaging means of the engaging gear member being provided in different configurations in different parts of the engaging gear member, preferably being in a continuously varying pattern.

Preferably multi-part teeth each comprise a plurality of tooth components, the number of tooth components being selectable so that different configurations or different dimensions of teeth on an engaging gear member can be engaged.

The term "micro-teeth" is not intended to indicate that the teeth are necessarily of a size of the order of micrometres. The size of the teeth will depend upon the dimensions of the gear means of which they form a part. The term "micro" is here used to signify that the teeth are smaller than would normally be used for a similar scale of gear means or smaller than the teeth which they are provided to engage.

The micro teeth engaging means may comprise engaging units arranged substantially randomly with respect to one another. This has the effect that, if the engaging units are spread over a surface which varies in radius, the other gear element, comprising micro teeth, can always successfully engage some of the engaging elements of the micro teeth engaging means, as the micro teeth will effectively select those engaging units which are in the correct configuration. This is particularly the case if the engaging units of the second gear element comprise hooks and the engaging units of the first gear element comprise loops or hooks, for example as in a hook-and-loop fastener of the type including Velcro (RTM).

It is desirable in this case that at least one of the micro teeth and the engaging units (and preferably both of them) has a certain amount of flexibility so that it can enter into the successful engagement configuration.

The term "engaging units" is used generally to define some kind of structure which projects, in at least one configuration, from a surface of one of the gear elements, for entering into a thrust transmitting contact or relationship with at least one engaging unit of the other gear element The expression "engaging element" embraces a wide range of different structures, including teeth, retrudable pegs, hooks etc.

They may be such that the gear member can engage with teeth of another gear member to provide variable gear ratio. Micro-teeth may be fixed (or not movable) or not reciprocable, e.g. they may be hinged, e.g. miniature flaps or trap-doors.

Teeth-receiving means may be effectively a series of holes, along a line or perhaps constituting an array, possibly extending in two dimensions.

Part of a tooth can move relative to another part.

The present invention further provides a gear member having movable teeth. The teeth may be rotary, e.g. mounted to a pivot The teeth may be rotatable. The teeth may be reciprocable. The teeth may be spring-urged, e.g. towards an engaging position, and/or towards a disengaged position. The teeth may be able to be magnetically urged or moved, e.g. by an engaging gear member that is magnetic, e.g. magnetised, or adapted to be magnetised temporarily, e.g. by said teeth or again by other suitable magnetic means. The teeth may be gravity-urged or-moved. The teeth may be electrostatically urged or moved, e.g. by being made of a suitably electrostatically chargeable material, e.g. plastics, e.g. nylon.

The present invention further provides a gear member having retrudable teeth, e.g. spring-urged, e.g. towards engagement, Le. towards an engaging position. The gear member may be such that it can engage positively with different spacings of teeth of an engaging gear member. "Positively" means "not simply by friction" or
"without slip". By "without slip" it is meant that the surface of a first moving or rotating gear element shall substantially not move with respect to the surface of another gear element, though it is of course permitted that teeth or components of teeth, which form part of the respective gear element may slide with respect to the gear element of which they form part.

A variable tooth suitable for use in any such gear member, may be provided. Such a tooth is variable in position, orientation, shape, size and or any other suitable characteristic.

The present invention further provides a variable gear comprising two members that can inter-engage with different velocity ratios, at least one member having retrudable teeth to engage teeth of the other in different numbers to obtain the different velocity ratios.

The present invention can be employed to provide a variable gear (i.e. a variable gear). This is to be contrasted with an infinitely variable transmission which does not have positive gearing from its input to its output. The gear may in fact operate with its gear ratio (or velocity ratio) variable only in steps, but these steps being so small that for practical purposes the gear is variable. In a variation from a substantially infinitely variable gear, the steps are substantial, i.e. large enough to be able to be made use of, e.g. for digitised working of a gear or registration of its velocity ratio from time to time. Thus, there is provided a gear having micro-teeth and/or able to engage another gear member positively and adaptably, and having a velocity ratio variable in steps, the steps being substantial.

Normally, gear ratios advance in integer steps (e.g. 1:1, 1:2, 1:3 etc). According to the present invention, the steps may be any suitable fraction of an integer, for example 0.3, more preferably at least 0.2 and suitably 0.1 or less.

Where there are discrete steps in the gear ratio, however small, transition from one gear ratio to another may be detectable by a variation or a "ripple" in a parameter which may be monitored, for example the speed, the torque, deflection of the component of the gear element etc. By measuring this ripple, the change can be measured and controlled. Preferably, the gear means comprises a sensor for giving a signal dependent upon changes in gear ratio. Preferably, there is a processor to which the signal dependent upon changes in gear ratio is input, to allow the gear means to be controlled.

Where the engaging units comprise hooks and loops of a hook-and-loop arrangement, for example Velcro (RTM), the hooks may be provided in a substantially random array or in a regular array. Preferably, hooks are provided with sets of hooks spaced apart from other sets of hooks by gaps extending in the axial direction. This is found to enhance flexibility and the engagement/release of hooks with the loop structure, giving a smoother drive with less frictional loss of energy.

The hooks may have any suitable shape. For example, they may have the shape of a conventional hook, having an end which curves around a section of arc. Alternatively, they may comprise a stem with an enlarged portion at one end or they may have a shape of a mushroom.

Where there are spaced sets of hooks, the sets may comprise regular arrays of hooks. Preferably, they comprise parallel rows of hooks. Preferably, there are between 1 and 5 rows of hooks, preferably around 2 or 3 rows of hooks.

Where the hooks comprise a stem with an enlarged head, the loops may in fact be provided by arrays of projections which also have a stem and an enlarged head. Suitably, the arrays comprise at least three, preferably at least four projections defining between the stems a space large enough to accommodate the enlarged head of one of the opposing hooks. The hook is then engageable with the loops" by being pressed past the enlarged heads of the projections and into the space where it is resiliently held.

A variable gear is a gear that comprises an input, an output, and means to vary the velocity ratio between the input and output. According to another aspect of the invention, there is provided a variable gear which comprises an input, an output, positive gearing from the input to the output, and means to vary the velocity ratio between the input and output. The varying means may be automatic. The varying means may have control means wholly internal to the gear. The variation may be from a first value of velocity ratio to a second value (or through a second value back to the first value) going from the beginning to the ending of a specified (or predetermined) movement of the input. If the varying means is linked directly to the input, movement of the output will vary according to the square of the movement of the input. If the varying means is linked directly to the output, movement of the output will vary according to a more interesting function of the movement of the input. It will be readily appreciated by a mathematician-engineer that indirect connections, e.g. operating the varying means through a varying means itself operable from the input and/or output, or even more complex connections, are possible, e.g. to provide an integrating engine, e.g. to solve differential equations. Again, the varying means may be arranged to change the velocity ratio from a first value to a second value and back again, repeatedly and cyclically, in the course of ongoing motion of the input, e.g. giving a velocity ratio changing from 1:5 to 1:10 and back again, repeatedly and cyclically over equal or differing time intervals. The control of the varying means may be effected by cam or other sliding means or by positively engaging means, in either case having a simple or complex profile as the case may require.

There may be provided a variable gear comprising a conical gear member with fixed elongate teeth (each one perhaps being of varying cross-section and/or height) extending along conical generator lines and an engaging gear wheel that can engage the conical gear member at different points along its generators and has multiple retrudable teeth around its rim such that differing pluralities of these teeth can engage between two adjacent said elongate teeth. The gear wheel may have two or more parallel rows of retrudable teeth around its rim, possibly with the teeth of one row being staggered with respect to those of another row. Successive teeth in a row may be mounted alternately to weaker and stronger spring means. The strongly mounted teeth of one row may be staggered with respect to the strongly mounted teeth of an adjacent row. The retrudable teeth may be cylindrical, e.g. circular or square cross-section cylinders, or may be plates, e.g. rectangular plates. A large number, e.g. more than five, or preferably more than ten, of the retrudable teeth of the one member may sit between two adjacent fixed teeth of the other member (such teeth are considered micro-teeth) and one or more of them may be in thrust-transmitting relationship, directly or indirectly, with a said fixed tooth. A retrudable tooth may be in thrust-transmitting relationship with a fixed tooth indirectly through one or more neighbouring retrudable teeth. An alternative is for each retrudable tooth to transmit thrust individually to the gear member to which it is mounted. Generally, the thrust will be substantially at right angles to the direction of retrusion.

Alternatively, the inverse may be provided, with large numbers of retrudable teeth on the conical member, not necessarily arranged in lines along generators thereof, and with co-operating fixed teeth on the engaging gearwheel. Different numbers of retrudable teeth may engage, or at least sit, between adjacent fixed teeth. According to another aspect of the invention, there is provided a variable gear comprising a conical gear member with large numbers of retrudable teeth and an engaging gearwheel that can engage the conical gear member at different points along its generators and has fixed teeth around its rim such that differing pluralities of the retrudable teeth can engage between two adjacent said fixed teeth.

In a prototype, each retrudable tooth was an electrical pressure spring-contact in the form of a spring-loaded peg with a four-spiked crown, as part number PC4QX from Coda Systems Limited of Agricultural House, The Avenue, Braintree, Essex, CM7 3HY, UK. Its crown has spikes in order to make good electrical contact under pressure, but for the purposes of the present invention the spikes were filed off and the end of the peg smoothed over. To adapt the contact to be a retrudable tooth for use in embodiments of the present invention, and make it stronger to withstand sideways forces on the crown end of the peg (which were not contemplated with the spring-contact, that was designed simply to make electrical contact with a lid when it closes), the peg may be made thicker, or of plate-like form, or its supporting casing may be formed to hug the peg substantially throughout its length that is form time to time within the casing. Mostly, the retrudable tooth is adapted to be retruded resiliently. The resilience allows the amount of retrusion to vary in accordance with the surface shape of the engaging member, and their instantaneous inter-engagin positions.

In an inverse unclaimed embodiment, the retrudable teeth are on the conical member. Again, there may be retrudable teeth on both members. Alternate retrudable teeth may be on weaker and stronger weighted springs, and the same on the other member.

In another arrangement, a first gear member is in the form of a wheel with a flat or domed side face and an engaging second gear member is in the form of a wheel with a domed side face, both of said faces mounting teeth. Such a domed member may be thought of as a mushroom-like member. One said side face has elongate teeth extending radially thereof and arranged around the face. The other said side face has retrudable teeth to engage the teeth of said one side face. The members are so arranged that the point of engagement can be moved radially of one and/or the other said side face to change the velocity ratio. Again, both of said side faces may have only retrudable teeth. In any case, the retrudable teeth may retrude substantially parallel to the axis of their member, i.e. the axis around which the member has its form (usually its rotary axis or axis of rotational symmetry, if it rotates or is symmetrical); in such case the teeth being retrudable substantially parallel to each other (instead of in the case of the teeth being on a rim with each tooth retrudable at a substantial angle to its neighbour) neighbouring retrudable teeth can be mounted very close together. Either or both of the members may have an axle which is itself pivotally mounted so that different parts of its said face (preferably the domed one, the pivot then being preferably at the geometric centre of the dome) can engage said teeth of the other member, and/or one or both axles may be moved transverse to itself for the same reason.

In an unclaimed alternative arrangement, a pair of such wheels with radially extending elongate teeth on their face may be mounted together as a unit co-axially and suitably to rotate in opposite directions, with an input wheel engaging both of them simultaneously at its rim and an output wheel engaging both of them simultaneously at its rim and co-axial with the input wheel. According to another aspect of the invention, there is provided a gear comprising a first gear member in the form of a wheel with a flat or domed side face and an engaging second gear member in the form of a wheel with a flat or domed side face, both of said wheels being provided with radially extending elongate teeth on their mutually opposed faces and being mounted together as a unit co-axially and suitably to rotate in opposite directions, with an input wheel engaging both of them simultaneously at its rim and an output wheel engaging both of them simultaneously at its rim and co-axial with the input wheel. Movement of one or both of the input and output wheels in a direction radial to the wheels of said unit can vary the velocity ratio of the arrangement. Alternatively, movement of the unit in the axial direction of the input and output wheels will vary the velocity ratio.

In other unclaimed embodiments, there may be one or more members each of which is a rack or like member, i.e. one which moves substantially linearly and/or one which has a substantially linearly moving point of engagement.

A conical member may engage such a rack member, one or both of them being movable along the rotary axis of the conical memberto vary the velocity ratio. As before, retrudable teeth may be on one or both of these members. A wheel-like member (e.g. a circularly cylindrical roller) with retrudable teeth may be between two such rack members with their teeth faces facing each other, one rack member with fine teeth and the other rack member with coarse teeth, so that the wheel-like member can engage both the fine teeth of one rack member and the coarse teeth of the other rack member simultaneously to effect anti-parallel movement between the rack members or to engage the rack members with relative anti-parallel movement between them.

In a further arrangement, an elongate flexible gear member, e.g. a toothed belt or a chain, engages a conical rotary gear member, either or both of them having the retrudable and/or micro- teeth, the flexible gear member being moved along the conical member to change the gear ratio of their engagement. According to another aspect of the invention, there is provided a gear comprising an elongate flexible gear member and a rotary gear member which the elongate member engages, either or both of them having retrudable teeth and/or micro-teeth, the gear comprising means to vary the gear ratio of their engagement. Preferably, there is provided a gear comprising an elongate flexible toothed gear member and a conical rotary gear member which the elongate member engages, either or both of them having retrudable teeth and/or micro-teeth, the flexible-gear member being movable along the conical member (and/or vice versa) to vary the gear ratio of their engagement. In a variation, the conical member may be replaced by a gearwheel having sectors that can be moved radially, e.g. all simultaneously by the same amount to change the effective radius of the gear wheel, (or their radii could be changed by different amounts, or again there could be a fixed radii gear wheel having different radii at different points along its toothed track, in either case the toothed track being like a cam track but with engaging teeth to transmit engaging movement sideways along the toothed track instead of the usual transmission of vertical movement due to sliding along a cam track,) to change the velocity ratio. Use of the special teeth will enable the flexible member to engage substantially continuously with the rotary member while the latter's sectors move radially and, for example, there is increasing circumferential spacing between the successive toothed tracks of the respective sectors as they move outwards. In any of these examples, the usual tensioning member (usually a spring-mounted wheel) may be used for the flexible gear member. In a variation, such a gear wheel having changeable radii inter-engages with another gear wheel (one or both of the wheels (more correctly their rotary axes) being moved together or moved apart to maintain engagement under a radius change), whereby a radius change can provide a substantially continuously variable gear ratio. According to another aspect of the invention, there is provided a gear comprising a gearwheel having changeable radii and another gear wheel that inter-engages therewith, whereby a radius change can provide a substantially continuously variable gear ratio. Preferably, both of the wheels are toothed at their rims. Preferably, the wheels are coplanar. If two such gear wheels having changeable radii inter-engage, and an increase in the radius of one is matched by an equal decrease in the radius of the other, the two wheels do not have to be moved together or apart under a radius change. Various mechanisms are known to change the positioning of parts of a rotating member. A particularly simple control for changing the velocity ratio could result if the control movement to change the radii is along a line intersecting the respective rotary axes of the two wheels, which are parallel, for example a 1 cm control movement along this line could extend the radius of one wheel by 1 cm and reduce the radius of the other wheel simultaneously by 1 cm.

In another arrangement, the micro-teeth may be of hook-and-loop form, in the manner of material known under the trade name Velcro, e.g. with hook-form teeth on one gear member and loop-form teeth on an engaging gear member. According to another aspect of the invention, there are provided gear means comprising micro-teeth of hook-and-loop form. In some applications, it may be appropriate to have the two members "sticking" together, e.g. if one member depends (hangs) from the other. For example, one member may have a flat underside provided with one kind of these teeth (like an aforementioned rack, but preferably extending in two dimensions), and the other member may be a rotary member provided with the other kind of these teeth to co-operate (inter-engage) with said one kind, for said other member to depend from said one member, said other member being provided with a mechanism to cause it to rotate to travel (in one or two dimensions) around said underside. In other applications, the micro-teeth may have a modified form, and/or be of a modified material (e.g. thin springy steel wire), so that there is less (or even negligible) sticking, e.g. upon rotary motion. The need for such hook-and-loop form may then be simply to help resist sliding between the gear members, while presenting negligible resistance to rotary motion.

As with all examples indicated herein, any features may be applied to any embodiments, and: (1) movements are relative and in practice any one, or both (or all), of the gear members may move, (2) the special teeth may be on any one, or both (or all), of the gear members, (3) the special teeth may (each tooth, or among a plurality of them) have one or more of the properties of being changeable, retrudable, obtrudable and/or micro-teeth, (and references herein to retrudable or retrusion may, according as the case will allow, be replaced by references to obtrudable and obtrusion,) (4) the special teeth may be applied to any form of gearing, whether known or to be designed in the future, and because of the special properties they give a gear member may facilitate new designs of gearing, e.g. serving to transmit movement or power between gear members having teeth of incompatible sizes to inter-engage, e.g. as with the pair of racks, (5) the gearing may be (substantially) continuously variable gearing, for which the special teeth are particularly suitable, but also may be non-variable, e.g. as with the pair of racks, and indeed use of gear members in gear trains or other gearing, solely or in combination with one or more gear members not having the special teeth, can be a great advantage as there is then (in most cases, an exception being when one gear member has fixed unchangeable micro-teeth and the other has fixed unchangeable means to engage those teeth, being either fixed unchangeable micro-teeth in a fixed unchangeable array of micro-holes to receive and engage respective micro-teeth) no need to concern oneself with the number of teeth and, for example, only the diameter of a gear wheel will be important, so that, for example, if a conventional gear wheel fails and is to be replaced, it may be replaced with one having the special teeth and the correct diameter and other properties without one being concerned as to the number of teeth since it will adapt itself to engage teeth of any pitch and shape, (6) gearing embodying the invention may be used either to transmit continuing movement (simply to transmit movement, e.g. as with a clock, or to transmit power) or to transmit one or more positional changes or combinations of positional changes, e.g. a gear member may comprise only a sector of a gear wheel, or again only one or more sections of a gear member's toothed track may be made of the special teeth, (7) the term "micro-teeth" may (according as the case will allow) include microteeth-engaging means, e.g. a surface having an array of holes adapted to receive respective micro-teeth.

There can be provided a substantially infinitely variable gear with positive movement transmission from its input to its output adapted to transmit one or more positional changes or combinations of positional changes.

Of course, the invention may extend to articles other than gears, which articles have to inter-engage positively, i.e. not simply by friction, to transfer drive.

According to another aspect of invention, there is provided a method in accordance with claim 15 of repairing or modifying gear means in which a gear member thereof is replaced by a gear member embodying the invention.

### PARTICULAR DESCRIPTION RELATING TO THE DRAWINGS

Reference will now be made by way of example to the accompanying drawings, in which:
Figure 1 is a schematic side view of generalised gear means embodying the invention;
Figure 2 is a schematic side view of a particular embodiment of the invention;
Figure 3 is a schematic partial cross-sectional view on the line III-III of Figure 2;
Figure 4 is a view like Figure 2 of a variation of the Figure 2 embodiments;
Figure 5 to 10 are schematic drawings of details of variations of the Figure 4 embodiment, of which

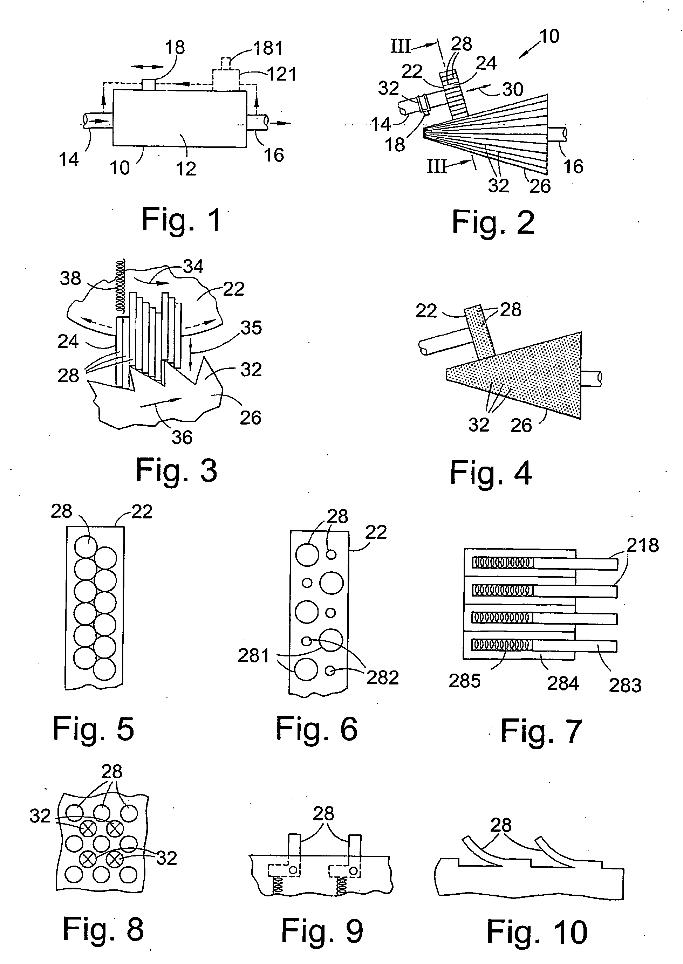

Figures 5 and 6 are partial side views, Figures 7, 9 and 10 are partial vertical cross-sections, and
Figure 8 is a partial layout arrangement of micro-teeth of inter-engaging gears;

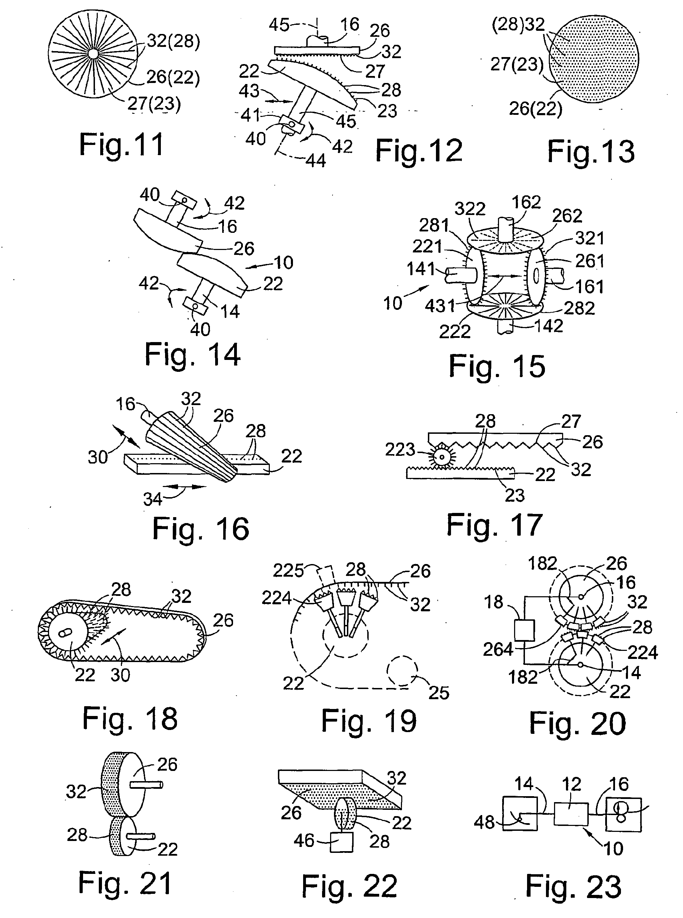

Figures 11 and 13 are axial views of different embodiments of the toothed face of a gear wheel for use in the Figure 12 embodiment;
Figure 12 is a schematic side view of an embodiment differing substantially from that of Figure 2;
Figures 14 and 15 are schematic side and slightly perspective views, respectively, of variant developments of the Figure 12 embodiment;
Figures 16 and 17 are schematic slightly perspective and side views, respectively, of embodiments based on rack-and-pinion mechanisms;
Figures 18 and 19 are schematic slightly perspective and side views, respectively, of embodiments based on wheel-and-belt mechanisms;
Figure 20 is a schematic side view of a development of the Figure 19 embodiment;
Figures 21 and 22 are perspective views of further embodiments with hook-and-loop micro-teeth; and
Figure 23 is a schematic top view of a variable velocity ratio, positional indicator embodying the invention.

Referring to drawings, like references in the various Figures denote like items or items having like functions. Where the first two digits are the same in two references, the corresponding items have the same or similar functions, or are parts of a common item.

A gear 10 (e.g. a gear train 10), Figure 1, may be considered to be a black box 12 having an input 14 and an output 16 with a velocity ratio (gear ratio) between them, for example one tum of an input shaft 14 may produce ten turns of an output shaft 16. The black box 12 may have a control member 18 which can change the velocity ratio; member 18 may be a motor vehicle gear lever 18 or shift stick 18. The input 14 and output 16 may be rotary, reciprocatory, positional or otherwise, and one may be of one kind and the other may be of another kind. There may be more than one input 14 and more than one output 16. There may be more than one control member 18. AS shown in dashed lines, a control member 18 may be connected to an input 14 and/or an output 16, directly or indirectly, e.g. through its own (second level) black box 121 having its own control member/s 181. This may apply to more than one control member 18. There may be any number of such levels, possibly different numbers of levels for different control members 18. The black boxes 18, 181 etc may be interconnected in any desired ways. In conventional motor vehicles, the velocity ratio is changed stepwise ("first gear", "second gear" and so on) and requires use of a manual or automatic clutch; it cannot be varied continuously with a mechanical gear.

In an unclaimed example of the invention, see Figure 2, the black box 12 comprises a gear train 10 having a variable velocity ratio, positively engageable gear member 22 to provide an infinitely variable transmission. Gear member 22 has means 24 to engage another gear member 26 positively with variable velocity ratio. Means 24 comprise a plurality of components 28 suitable to enable gear member 22 to engage the other gear member 26 positively with variable velocity ratio, the variation in velocity ratio being obtained by moving gear member 22 in the direction of arrow 30 by means of control member 18, shown as a pin 18 that sits between collars 32 fixed to input shaft 14 of gear member 22.

The gear member 22 has a set 24 of special teeth 28 which are micro-teeth 28 in that a large number (exemplified in Figure 3 as five, but preferably in the range twenty to fifty) can sit between successive teeth 32 of engaging gear member 26. Gear member 22 rotates in the direction of arrow 34 and drives gear member 26 in the direction of arrow 36. Micro-teeth 28 can reciprocate radially in gear member 22 and are urged outwards by spring means 38, of which for clarity only one is shown for one micro-tooth 28. Each micro-tooth 28 is preferably shaped as a rectangular plate, seen in edge view in Figure 3. Its outer (engaging) edge may be rounded from face to face. The plates 28 may be touching each other if sufficiently thin, or each one may be held in its own casing (not shown) provided with its own spring means 38; the casings then form part of gear member 22. Each tooth 32 is elongate, extending along a generator of conical gear member 26, and tapers. The micro-teeth 28 can adapt to the taper because they are reciprocable and to the changing spacing between successive teeth 32 as gear member 22 moves in the direction of arrow 30 from one end to the other of gear member 26 because there are many of the micro-teeth 28 compared with the number of elongate teeth 32.

In another unclaimed example, see Figure 4, elongate teeth 32 of gear member 26 are replaced by a two-dimensional array of micro-teeth 32 or micro-holes 32 spread over the whole engaging area of gear member 26, and micro-teeth 28 are formed as spring-urged reciprocable pins 28 extending in one or more rows around the rim of gear member 22, so that a large number micro-teeth 28 can simultaneously engage fixed micro-teeth 32 (or the microteeth-engaging means formed by the two-dimensional array of micro-holes 32 adapted to receive respective micro-teeth 28) of the engaging gear member 26. Micro-teeth 28 may be made slightly flexible to facilitate continuing engagement in the course of movement of gear member 22 in the direction of arrow 30.

Micro-teeth 28 in the Figure 5 embodiment are arranged in staggered rows. Micro-teeth 28 in the Figure 6 embodiment are arranged alternately with strong and weak spring means (micro-teeth 281 and 282 respectively), neighbouring rows being staggered in this respect, as shown. Micro-teeth 28 may be in the form of pins 283, each mounted in a casing 284, urged outwardly by a spring 285, Figure 7.

If the micro-teeth 28, 32 in respective gear members 22, 26 are all fixed (not movable and not flexible), they may inter-engage alternately in the manner shown schematically in Figure 8. Again, micro-teeth 28 may be pivoted (see Figure 9) or resiliently fixed and outwardly biased as exemplified in Figure 10. These two arrangements, as shown, depending upon the strength of their resilience, favour drive in one direction and slip in the opposite direction, in the manner of a ratchet mechanism. These two arrangements may be in the nature of miniature flaps or trap-doors.

A gear member having teeth-receiving means adapted to engage micro-teeth of another gear member. Such teeth-receiving means may be effectively a series of holes, along a line or perhaps constituting an array, possibly extending in two dimensions.

As seen in Figures 3 and 7, micro-teeth 28 are changeable teeth. Micro-teeth 28, Figure 3 are movable. Part 283 of a micro-tooth 28, Figure 7, can move relative to another part 284.

in a variation on the Figure 2 arrangement, gear member 22 is mounted below gear member 26, and micro-teeth 28 are loosely mounted and magnetic and are attracted upwardly into operative engaging position with teeth 32 because the latter are magnetised. In an alternative of variation, gear member 22 is mounted above gear member 26 with its micro-teeth 28 loosely mounted and downwardly urged by gravity into engagement with teeth 32.

Individual variable teeth 28 may be sold for the purchaser to make up their own gear member.

It will be seen that the embodiments just described provide a variable gear 10 comprising two members 22, 26 that can inter-engage with different velocity ratios, at least one member 22 having retrudable teeth 28 to engage teeth 32 of the other member 26 in different numbers to obtain the different velocity ratios. Thus, gear 10 is a variable gear rather than a changeable gear.

The Figure 2 embodiment exemplifies a variable gear 10 comprising a conical gear member 26 with fixed elongate teeth 32 (each one being of varying cross-section and possibly height) extending along conical generator lines and an engaging gear wheel 22 that can engage the conical gear member 26 at different points along its generators and has multiple retrudable teeth 28 around its rim such that differing pluralities of these teeth 28 can engage between two adjacent said elongate teeth 32. The gear wheel 22 may have two or more parallel rows of retrudable teeth 28 around its rim, possibly with the teeth of one row being staggered with respect to those of another row as exemplified in Figure 5. As exemplified in Figure 6, successive teeth 281, 282 respectively in a row are mounted alternately to weaker and stronger spring means, and the strongly mounted teeth 281 of one row are staggered with respect to the strongly mounted teeth 281 of an adjacent row. The teeth 28, Figure 3, are in thrust-transmitting relationship, directly or indirectly, with a said fixed tooth 32. In the Figure 3 arrangement, a retrudable tooth 28 is in thrust-transmitting relationship with a fixed tooth 32 indirectly through one or more neighbouring retrudable teeth 28. In the Figure 7 arrangement, each retrudable tooth 28 is arranged to transmit thrust individually to the gear member 22 to which it is mounted. In operation, the thrust will be in the direction of arrow 36 and therefore substantially at right angles to the direction 35 of retrusion.

In a variation of the embodiments of Figures 2 and 4, the inverse is provided, with large numbers of retrudable teeth 32 on the conical member 26, not necessarily arranged in lines along generators thereof, and with co-operating fixed teeth 28 on the engaging gearwheel 22. Different numbers of retrudable teeth 32 may engage, or at least sit, between adjacent fixed teeth 28.

In the aforesaid prototype, each retrudable tooth is as micro-tooth 28 shown in Figure 7, with the casing 284 formed to hug the peg 283 substantially throughout its length and/or at discrete intervals within the casing 284. The retrudable tooth 28 (more specifically the retrudable peg part 283 thereof) is adaptable to be retruded resiliently. The resilience allows the amount of retrusion to vary in accordance with the surface shape of the engaging member 26, and their instantaneous inter-engaging positions.

In an inverse embodiment, the retrudable teeth 32 are on the conical member 26. In another embodiment, there may be retrudable teeth 28, 32 on both members 22, 26. Alternate retrudable teeth 281, 282 may be on weaker and stronger weighted springs, and the same on the other member with retrudable resiliently mounted teeth 32.

In another arrangement, Figures 11 and 12, a first gear member 26 is in the form of a wheel 26 with a flat or domed side face 27 and an engaging second gear member 22 is in the form of a wheel 22 with a domed side face 23. The domed member 22 is a mushroom-like member 22. One said side face 27 has elongate teeth 32 extending radially thereof and arranged around the face 27. The other said side face 23 has retrudable teeth 28 to engage the teeth 32 of said one side face 27. The members 22, 26 are so arranged that the point of engagement can be moved (relatively speaking) radially of one and/or the other said side face 23, 27 to change the velocity ratio. Shaft 14 is rotatably mounted in a bearing 41, itself mounted to a pivot 40 at the centre of (spherical) curvature of face 23. Rotation of shaft 14 about pivot 40 (in the direction of arrow 42) moves the point of inter-engagement of members 22, 26 radially across surface 23 (in fact actually moving surface 23 across the point of inter-engagement). A universal joint may be provided at pivot 40. Alternatively, shaft 14 or shaft 16 may be moved linearly reciprocably in the direction of arrow 43 to move the point of inter-engagement radially across surface 32. Both movements may be possible, e.g. simultaneously. As indicated by the bracketed references in Figures 11, 13, either of members 22, 26 may have the elongate radial teeth 32, 28 and either or both may have the retrudable teeth 32, 28, so long as at least one members 22, 26 has the retrudable teeth 32,

If the side faces 27, 23 of both of members 22, 26 have retrudable teeth 28, 32 as seen in Figure 13, there can be relative twisting movement between members 22 and 26 about their unmoving point of inter-engagement, with no change of velocity ratio, quite apart from whether or not there is also simultaneously therewith the aforementioned radial movement of their point of inter-engagement to change their velocity ratio. There may also be circumferential movement of their point of inter-engagement with or without said twisting movement and/or said radial movement.

As is clear from Figure 12, the retrudable teeth 28, 32 retrude substantially parallel to the axis 44, 45 of their member 22, 26, and more particularly parallel to each other. The latter feature enables the micro-teeth 28 and/or 32 to be mounted more closely together, than is the case for example with rim-mounted micro-teeth 28 and/or 32.

If both of members 22, 26 are spherically domed, both of the members 22, 26 may have an axle 14, 16 which is itself mounted to a pivot 40 at the geometric centre of its dome. In that case, a particularly interesting gear 10, Figure 14, results, in which the point of inter-engagement is on the straight line intersecting both of pivots 40; but, more particularly, if both gears 22, 26 rotate simultaneously about pivots 40 in the same direction (e.g. clockwise as seen in Figure 14) by the same amount there is no change in velocity ratio but the transmission becomes smoother the nearer the point of inter-engagement is to the circumferences of the members 22, 26 because there are more micro-teeth engagements per degree of rotation of shafts 14, 16. There is a microscopic ripple in the transmission of movement from shaft 14 to shaft 16 due to the finite size of the micro-teeth 28, 32. Indeed, measurement of this ripple can be made to indicate the angle between axes 44, 45 (e.g. assumed maintained parallel) and said straight line intersecting both of pivots 40.

In another arrangement, Figure 15, a pair of wheels 222, 262 with radially extending elongate teeth 282, 262 on their flat facing faces are mounted together as a unit co-axially and suitably to rotate in opposite directions, not having any external driving connections through their shafts 142, 162, which are only for bearing the wheels 282, 262, with an input wheel 221 engaging both of them simultaneously by micro-teeth 281 at its rim and an output wheel 261 engaging both of them simultaneously by micro-teeth 321 at its rim and co-axial with the input wheel 221, so that wheels 282, 262 are not otherwise driven. Drive is then from input shaft 141 to output shaft 161. Of course, radial teeth 282, 322 may be replaced by micro-teeth 282, 322. (In an alternative embodiment, wheels 221 and 261 may be mounted together as a unit and the drive may be transmitted through an input axle 142 and output axle 162.) These arrangements give particularly well-balanced transmission, help to smooth any micro-ripple in transmission and double the power able to be transmitted by the gear 10. Elegantly, linear movement of the unit comprising wheels 222, 262, radially of these wheels 222, 262, in the direction of arrow 431, effects smooth variation in velocity ratio. Alternatively, one or both of wheels 221, 261 may be moved in the direction of arrow 431, e.g. both of wheels 221, 261 as a unit, to vary the velocity ratio. (These possibilities also apply to said alternative embodiment.) Of course, teeth 282, 322 may be retrudable micro-teeth instead of elongate fixed teeth.

In the Figure 16 embodiment, member 22 is a rack 22 or like member 22, and moves substantially linearly in the direction of arrow 34 to drive conical member 26 with a substantially stationary point of engagement, and driven member 26 then rotates about its axle 16. One or both of members 22, 26 is/are moved in the direction of arrow 30 which is parallel to the rotary axis of the conical member 26 to vary the velocity ratio. As before, retrudable micro-teeth 28 and/or 32 may be on one or both of these members 22, 26.

In the Figure 17 arrangement, a wheel-like member 223 (e.g. a circularly cylindrical roller 223) with retrudable teeth 28 may be between two such rack members 22, 26 with their teeth faces 23, 27 facing each other, one rack member 22 with fine teeth 28 and the other rack member 26 with coarse teeth 32, so that the wheel-like member 223 can engage both the fine teeth 28 of said one rack member 22 and the coarse teeth 32 of said other rack member 26 simultaneously to effect anti-parallel movement between the rack members 22, 26 if member 223 is a drive member or to engage the rack members 22, 26 with relative anti-parallel movement between them if one of members 22, 26 is a drive member and the other is a driven member.

In the Figure 18 arrangement, an elongate flexible gear member 26, e.g. a toothed belt 26 or a chain 26 engages a circumferentially toothed conical rotary gear member 22, either or both of them having retrudable teeth 28 and/pr 32 and/or micro-teeth 28 and/or 32, the flexible gear member 26 being moved along the conical member 22 in the direction of arrow 30 to change the gear ratio of their engagement.

In the Figure 19 arrangement, the conical member 22 of the Figure 18 arrangement may be replaced by a gear wheel 22 having sectors 224 that can be moved radially, e.g. all simultaneously by the same amour to change the effective radius of the gear wheel 22 to change the velocity ratio. Use of the special teeth 28, 32 (on one or both of members 22, 26) will enable the flexible member 26 to engage substantially continuously with the rotary member 22 while the latter's sectors 224 move radially and, for example, there is increasing circumferential spacing 225 between the successive toothed tracks of the respective sectors 224 as they move outwards, In any of these examples, the usual tensioning member 25 (usually a spring-mounted wheel 25) may be used to tension the flexible gear member 26.

In a variation of the Figure 19 arrangement, as seen in Figure 20, two such radially variable gear wheels 22, 26 inter-engage. Their axles 14, 16 are moved together or moved apart to maintain engagement of their respective teeth 28, 32 under a radius change, whereby a radius change can provide a substantially continuously variable gear ratio. Control means 18 may be arranged to ensure that an increase in the radius of one member 22 is matched by an equal decrease in the radius of the other member 26, and vice versa, so that the spacing between their axles 14, 16 does not need to be changed. Control means 18 preferably have a control member (shown schematically by arrows 182 connecting control means 18 to sectors 224 and 264) located on the notional line intersecting the rotary axes of axles 14, 16 and movable along this notional line to change the radii of both of members 22, 26 simultaneously by opposite and equal amounts.

In another arrangement, the micro-teeth may be of hook and-loop form, in the manner of material known under the trade name Velcro, e.g. with hook-form teeth on one gear member 22 and loop-form teeth on an engaging gear member 26, otherwise having the appearance of the Figure 4 embodiment, or the Figure 21 embodiment in which there is no possibility to change the velocity ratio.

In the Figure 22 embodiment, one member 26 has a flat underside provided with one kind of these teeth 32 (e.g. hooks) extending in two dimensions over said underside, and the other member 22 is a rotary member 22 provided with the other kind of these teeth 28 (e.g. loops) to inter-engage with said one kind of teeth 32, for said other member 22 to depend from said one member 26, said other member 22 being provided with a mechanism 46 to cause it to rotate to travel (in one or two dimensions) around said underside.

In the Figure 23 embodiment, there is provided a substantially infinitely variable gear 10 with positive movement transmission from its input 14 to its output 16 by way of a black box 12 suitably designed in accordance with the principles enunciated above, especially in relation to Figure 1, to transmit combinations of positional changes, exemplified as transforming a two-dimensional input curve 48 into a two-dimensional output curve 50, being a complex function of curve 48, using two infinitely variable velocity ratios, one along the x-axis and one along the y-axis, correspondingly complexly controlled by black box 12. Alternatively, there may be a variable velocity ratio transmission from a curve in Cartesian co-ordinates to a related curve in polar co-ordinates. Further, a transmission with three variable velocity ratios can be used for transforming one curve to another in three dimensions. In theory, this could be extended to more dimensions, or at least three-dimensional representations thereof.

The present invention has been described above by way of example only and modification can be made within the invention.

## Claims

1. A variable gear (10) which comprises an input (14), an output (16), positive gearing from the input (14) to the output (16), and a means (18) to vary the velocity ratio between the input and output, the variable gear(10) comprising a gear member (22) engagable with an engaging gear member(26), the gear member (22) having movable, separately mounted teeth (28), at least part of a movable tooth (28) being movable, a movable tooth (28) being individually reciprocable or rotatable about a pivot, **characterised in that** the movable teeth (28) are such that:
(a) a variable number of the movable teeth (28) can sit between successive teeth (32) of an engaging gear member (26), or
(b) a variable number of the movable teeth (28) can engage with a variable number of teeth (32) of the engaging gear member (26),
whereby the gear member (22) can engage the engaging gear member (26) positively with variable velocity ratio.

2. A variable gear (10) as claimed in claim 1, in which the teeth (28) of the first gear member (22) are spring-urged.

3. A variable gear (10) as claimed in claim 1 or 2,
wherein the first gear member (22) has retrudable teeth (28.

4. A variable gear (10) as claimed in claim 3, in which the first gear member (22) is such that it can engage positively with different spacings of teeth (32) of the engaging gear member (26).

5. A variable gear (10) acccrding to any preceding claim wherein the first gear member (22) has retrudable teeth (23) to engage teeth (32) of the engaging gear member (26) in different numbers to obtain the different velocity ratios.

6. A variable gear (10) according to claim 3 wherein the engaging gear member (26) comprises a conical gear member with fixed elongate teeth (32) expending along conical generator lines and the first gear member (22) comprises a gear wheel that can engage the conical gear member (22) at different points along its generators, the gear wheel having multiple retrudable teeth (28) around its rim such that differing pluralities of these teeth (28) can engage between two adjacent said elongate teeth (32).

7. A variable gear (10) as claimed in claim 6, in which the gear wheel (22) has two or more parallel rows of retrudable teeth (28) around its rim.

8. A variable gear (10) as claimed in claim 7, in which the teeth (28) of one row are staggered with respect to those of another row.

9. A variable gear (10) as claimed in claim 6,7 or 8, in which successive teeth (281, 282) in a row are mounted alternately to weaker and stronger spring means.

10. A variable gear (10) according to claim 1, comprising a primary gear member in the form of a wheel with a flat or domed side face (27) and a secondary gear member in the form of a wheel with a domed side face (23), both of said faces (23,27) mounting teeth (28,32), at least one of said primary and secondary gear members being a first gear member (22) as defined in clam 1.

11. A variable gear (10) according to claim 1, comprising a primary gear member (222) in the form of a wheel with a flat or domed side face and a secondary gear member (322) in the form of a wheel with a flat or domed side face, both of said wheels (222, 322) being provided with radially extending elongate teeth on their mutually opposed faces and being mounted together as a unit co-axially and suitably to rotate in opposite directions, with an input wheel (221) engaging both of them simultaneously at its rim and an output wheel (261) engaging both of them simultaneously at its rim and co-axial with the input wheel (221), at least one of the input and output wheels (221, 261) being a first gear member (22) as defined in claim 1.

12. A variable gear (10) according to claim 1 comprising a primary gear (26) and one or more secondary gear members (22) each of which secondary gear members is a rack or like member that moves substantially linearly and/or has a substantially linearly moving point of engagament, wherein the primary gear member (26) or at least ore of said secondary gear members is a first gear member (22) as defined in claim 1.

13. A variable gear (10) according to claim 1, comprising two rack members (22, 26) with their teeth faces facing each other, one rack member with fine teeth (28) and the other rack member (32) with coarse teeth, and a first gear member (223) which is as defined in claim 1 and is wheel-like, the first gear member (223) having retrudable teeth between said rack members so that the wheel-like member can engage both the fine teeth of one rack member and the coarse teeth of the other rack member simultaneously to effect anti-parallel movement between the rack members or to engage the rack members with relative anti-parallel movement between them.

14. A variable gear (10) according to claim 1, comprising an elongate flexible gear member (26) and a rotary gear member (22) which the elongate member engages, either or both of them being a first gear member as defined in claim 1 or claim 3, the gear comprising means to vary the gear ratio of their engagement.

15. A method of repairing or modifying gear means in which a gear member thereof is replaced by a first gear member (22) as defined in any of claims 1 to 5.

## Patentansprüche

1. Regelgetriebe (10), das aufweist: einen Antrieb (14); einen Abtrieb (16); eine zwangläufige Verzahnung vom Antrieb (14) zum Abtrieb (16); und eine Einrichtung (18), um das Geschwindigkeitsverhältnis zwischen dem Antrieb und Abtrieb zu variieren, wobei das Regelgetriebe (10) ein Getriebeelement (22) aufweist, das mit einem eingreifenden Getriebeelement (26) in Eingriff kommen kann, wobei das Getriebeelement (22) bewegliche, separat montierte Zähne (28) aufweist, wobei mindestens ein Teil eines beweglichen Zahnes (28) beweglich ist, wobei ein beweglicher Zahn (28) einzeln hin und her beweglich oder um einen Drehpunkt drehbar ist, **dadurch gekennzeichnet, dass** die beweglichen Zähne (28) so sind, dass:
(a) eine veränderliche Anzahl der beweglichen Zähne (28) zwischen aufeinanderfolgenden Zähnen (32) eines eingreifenden Getriebeelementes (26) sitzen kann, oder
(b) eine veränderliche Anzahl der beweglichen Zähne (28) mit einer veränderlichen Anzahl von Zähnen (32) des eingreifenden Getriebeelementes (26) in Eingriff kommen kann,
wobei das Getriebeelement (22) mit dem eingreifenden Getriebeelement (26) zwangläufig mit einem regelbaren Geschwindigkeitsverhältnis in Eingriff kommen kann.

2. Regelgetriebe (10) nach Anspruch 1, bei dem die Zähne (28) des ersten Getriebeelementes (22) federgetrieben sind.

3. Regelgetriebe (10) nach Anspruch 1 oder 2, bei dem das erste Getriebeelement (22) retrudierbare Zähne (28) aufweist.

4. Regelgetriebe (10) nach Anspruch 3, bei dem das erste Getriebeelement (22) so ist, dass es zwangläufig mit verschiedenen Zwischenräumen der Zähne (32) des eingreifenden Getriebeelementes (26) in Eingriff kommen kann.

5. Regelgetriebe (10) nach einem der vorhergehenden Ansprüche, bei dem das erste Getriebeelement (22) retrudierbare Zähne (28) aufweist, um Zähne (32) des eingreifenden Getriebeelementes (26) in unterschiedlicher Anzahl in Eingriff zu bringen, um verschiedene Geschwindigkeitsverhältnisse zu erhalten.

6. Regelgetriebe (10) nach Anspruch 3, bei dem das eingreifende Getriebeelement (26) ein kegelförmiges Getriebeelement mit stationären länglichen Zähnen (32) aufweist, die sich längs der kegelförmigen Erzeugenden erstrecken, und wobei das erste Getriebeelement (22) ein Zahnrad aufweist, das mit dem kegelförmigen Getriebeelement (22) an unterschiedlichen Punkten längs seiner Erzeugenden in Eingriff kommen kann, wobei das Zahnrad mehrere retrudierbare Zähne (28) um seinen Zahnkranz aufweist, so dass eine unterschiedliche Anzahl dieser Zähne (28) zwischen zwei benachbarten der länglichen Zähne (32) in Eingriff kommen kann.

7. Regelgetriebe (10) nach Anspruch 6, bei dem das Zahnrad (22) zwei oder mehr parallele Reihen von retrudierbaren Zähnen (28) um seinen Zahnkranz aufweist.

8. Regelgetriebe (10) nach Anspruch 7, bei dem die Zähne (28) einer Reihe mit Bezugnahme auf jene einer anderen Reihe versetzt sind.

9. Regelgetriebe (10) nach Anspruch 6, 7 oder 8, bei dem aufeinanderfolgende Zähne (281, 282) in einer Reihe abwechselnd an schwächeren und stärkeren Federmitteln montiert sind.

10. Regelgetriebe (10) nach Anspruch 1, das ein primäres Getriebeelement in der Form eines Rades mit einer flachen oder gewölbten Seitenfläche (27) und ein sekundäres Getriebeelement in der Form eines Rades mit einer gewölbten Seitenfläche (23) aufweist, wobei beide der Flächen (23, 27) Zähne (28, 32) montieren, wobei mindestens eines des primären und sekundären Getriebeelementes ein erstes Getriebeelement (22) ist, wie in Anspruch 1 definiert.

11. Regelgetriebe (10) nach Anspruch 1, das ein primäres Getriebeelement (222) in der Form eines Rades mit einer flachen oder gewölbten Seitenfläche und ein sekundäres Getriebeelement (322) in der Form eines Rades mit einer flachen oder gewölbten Seitenfläche aufweist, wobei beide der Räder (222, 322) mit sich radial erstreckenden länglichen Zähnen auf ihren gegenseitig gegenüberliegenden Flächen versehen sind und miteinander als eine Einheit koaxial und geeignet montiert sind, um sich in entgegengesetzten Richtungen zu drehen, wobei ein Antriebsrad (221) mit beiden von ihnen gleichzeitig an seinem Zahnkranz in Eingriff kommt, und wobei ein Abtriebsrad (261) mit beiden von ihnen gleichzeitig an seinem Zahnkranz in Eingriff kommt und koaxial mit dem Antriebsrad (221) ist, wobei mindestens eines von Antriebs- und Abtriebsrad (221, 261) ein erstes Getriebeelement (22) ist, wie in Anspruch 1 definiert.

12. Regelgetriebe (10) nach Anspruch 1, das ein primäres Getriebeelement (26) und ein oder mehrere sekundäre Getriebeelemente (22) aufweist, wobei ein jedes der sekundären Getriebeelemente ein Zahnstangen- oder gleichartiges Element ist, das sich im Wesentlichen linear bewegt und/oder einen im Wesentlichen sich linear bewegenden Eingriffspunkt aufweist, wobei das primäre Getriebeelement (26) oder mindestens eines der sekundären Getriebeelemente ein erstes Getriebeelement (22) ist, wie in Anspruch 1 definiert.

13. Regelgetriebe (10) nach Anspruch 1, das aufweist: zwei Zahnstangenelemente (22, 26), wobei ihre Kopfflanken zueinander hin liegen, ein Zahnstangenelement mit feinen Zähnen (28) und das andere Zahnstangenelement mit groben Zähnen (32); und ein erstes Getriebeelement (223), das so ist, wie es im Anspruch 1 definiert wird, und das radartig ist, wobei das erste Getriebeelement (223) retrudierbare Zähne zwischen den Zahnstangenelementen aufweist, so dass das radartige Element mit sowohl den feinen Zähnen des einen Zahnstangenelementes als auch den groben Zähnen des anderen Zahnstangenelementes gleichzeitig in Eingriff kommen kann, um eine antiparallele Bewegung zwischen den Zahnstangenelementen zu bewirken, oder um die Zahnstangenelemente mit einer relativen antiparallelen Bewegung zwischen ihnen in Eingriff zu bringen.

14. Regelgetriebe (10) nach Anspruch 1, das ein längliches flexibles Getriebeelement (26) und ein rotierendes Getriebeelement (22) aufweist, das mit dem länglichen Element in Eingriff kommt, wobei entweder eines oder beide davon ein erstes Getriebeelement ist, wie es im Anspruch 1 oder Anspruch 3 definiert wird, wobei das Getriebe eine Einrichtung aufweist, um das Übersetzungsverhältnis ihres Eingriffs zu variieren.

15. Verfahren zum Reparieren oder Modifizieren einer Getriebeeinrichtung, wobei ein Getriebeelement davon durch ein erstes Getriebeelement (22) ersetzt wird, wie in einem der Ansprüche 1 bis 5 definiert.

## Revendications

1. Engrenage à rapport variable (10), comprenant une entrée (14), une sortie (16), un engrènement positif de l'entrée (14) vers la sortie (16), et un moyen (18) pour changer le rapport de vitesses entre l'entrée et la sortie, l'engrenage à rapport variable (10) comprenant un élément d'engrenage (22) pouvant s'engager dans un élément d'engrenage à engagement (26), l'élément d'engrenage (22) comportant des dents mobiles à montage séparé (28), au moins une partie d'une dent mobile (28) pouvant être déplacée, une dent mobile (28) pouvant effectuer individuellement un mouvement alternatif ou tourner autour d'un pivot, **caractérisé en ce que** les dents mobiles (28) sont telles que :
(a) un nombre variable des dents mobiles (28) peut être agencé entre des dents successives (32) d'un élément d'engrenage à engagement (26) ; ou
(b) un nombre variable des dents mobiles (28) peut s'engager dans un nombre variable de dents (32) de l'élément d'engrenage à engagement (26) ;
l'élément d'engrenage (22) pouvant ainsi s'engager de manière positive dans l'élément d'engrenage à engagement (26), avec un rapport de vitesses variable.

2. Engrenage à rapport variable (10) selon la revendication 1, dans lequel les dents (28) du premier élément d'engrenage (22) sont soumises à une poussée par ressort.

3. Engrenage à rapport variable (10) selon les revendications 1 ou 2, dans lequel le premier élément d'engrenage (22) comporte des dents rétractables (28).

4. Engrenage à rapport variable (10) selon la revendication 3, dans lequel le premier élément d'engrenage (22) est tel qu'il peut s'engager de manière positive dans différents espacements de dents (32) de l'élément d'engrenage à engagement (26).

5. Engrenage à rapport variable (10) selon l'une quelconque des revendications précédentes, dans lequel le premier moyen d'engrenage (22) comporte des dents rétractables (28), en vue d'un engagement dans différents nombres de dents (32) de l'élément d'engrenage à engagement (26), pour établir des rapports de vitesses différents.

6. Engrenage à rapport variable (10) selon la revendication 3, dans lequel l'élément d'engrenage à engagement (26) comprend un élément d'engrenage conique, avec des dents allongées fixes (32) s'étendant le long de lignes génératrices coniques, le premier élément d'engrenage (22) comprenant une roue d'engrenage pouvant s'engager dans l'élément d'engrenage conique (22) au niveau de différents points le long de ses lignes génératrices, la roue d'engrenage comportant de multiples dents rétractables (28) agencées autour de son rebord, de sorte que différentes pluralités de ces dents (28) peuvent s'engager entre deux des dites dents allongées (32) adjacentes.

7. Engrenage à rapport variable (10) selon la revendication 6, dans lequel la roue d'engrenage (22) comporte deux ou plusieurs rangées parallèles de dents rétractables (28) agencées autour de son rebord.

8. Engrenage à rapport variable (10) selon la revendication 7, dans lequel les dents (28) d'une rangée sont décalées par rapport à celles d'une autre rangée.

9. Engrenage à rapport variable (10) selon les revendications 6, 7 ou 8, dans lequel des dents successives (281, 282) dans une rangée sont montées alternativement sur des moyens de ressort plus faibles et plus puissants.

10. Engrenage à rapport variable (10) selon la revendication 1, comprenant un élément d'engrenage primaire sous forme d'une roue, avec une face latérale plate ou bombée (27), et un élément d'engrenage secondaire sous forme d'une roue, avec une face latérale bombée (23), ces dites deux faces (23, 27) servant au montage de dents (28, 32), au moins un desdits moyens d'engrenage primaire et secondaire constituant un premier élément d'engrenage (22) comme défini dans la revendication 1.

11. Engrenage à rapport variable (10) selon la revendication 1, comprenant un élément d'engrenage primaire (222) sous forme d'une roue, avec une face latérale plate ou bombée, et un élément d'engrenage secondaire (322) sous forme d'une roue, avec une face latérale plate ou bombée, les dites deux roues (222, 322) comportant des dents allongées à extension radiale sur leurs faces mutuellement opposées et étant montées ensemble sous forme d'une unité, de manière coaxiale et appropriée pour tourner dans des directions opposées, avec une roue d'entrée (221) s'engageant de manière simultanée dans les deux au niveau de son rebord, et une roue de sortie (261) s'engageant dans les deux au niveau de son rebord, et étant coaxiale à la roue d'entrée (221), au moins une des roues d'entrée et de sortie (221, 261) comportant un premier élément d'engrenage (22) comme défini dans la revendication 1.

12. Engrenage à rapport variable (10) selon la revendication 1, comprenant un engrenage primaire (26) et un ou plusieurs éléments d'engrenage secondaires (22), chacun de ces éléments d'engrenage secondaires étant un élément de crémaillère ou similaire, se déplaçant de manière pratiquement linéaire et/ou comportant un point d'engagement mobile pratiquement linéaire, l'élément d'engrenage primaire (26) ou au moins un desdits éléments d'engrenage secondaires constituant un premier élément d'engrenage (22) comme défini dans la revendication 1.

13. Engrenage à rapport variable (10) selon la revendication 1, comprenant deux éléments de crémaillère (22, 26), les faces de dents de ceux-ci se faisant face, un élément de crémaillère comportant des dents fines (28) et l'autre élément de crémaillère (32) comportant des dents grossières, et un premier élément d'engrenage (223) comme défini dans la revendication 1, ayant la forme d'une roue, le premier élément d'engrenage (223) comportant des dents rétractables entre lesdits éléments de crémaillère, de sorte que l'élément en forme de roue peut s'engager dans les dents fines d'un élément de crémaillère et dans les dents grossières de l'autre élément de crémaillère pour entraîner un déplacement antiparallèle entre les éléments de crémaillère ou pour entraîner un engagement des éléments de crémaillère avec un déplacement antiparallèle relatif entre eux.

14. Engrenage à rapport variable (10) selon la revendication 1, comprenant un élément d'engrenage allongé flexible (26) et un élément d'engrenage rotatif (22), dans lequel s'engage l'élément allongé, l'un des éléments ou les deux constituant un premier élément d'engrenage comme défini dans la revendication 1 ou la revendication 3, l'engrenage comprenant un moyen pour changer le rapport d'engrenage de leur engagement.

15. Procédé de réparation ou de modification d'un moyen d'engrenage, dans lequel un élément d'engrenage de celui-ci est remplacé par un premier élément d'engrenage (22) comme défini dans l'une quelconque des revendications 1 à 5.
